# EUROPÄISCHE PATENTSCHRIFT

(11) **EP 0 372 528 B1**
(45) Veröffentlichungstag und Bekanntmachung des Hinweises auf die Patenterteilung: **21.04.1993**
(21) Anmeldenummer: 89122487.5
(22) Anmeldetag: 06.12.1989
(51) Int. Cl.: B23D 23/00, B23D 33/08, B23D 15/04, B23D 35/00

(54) **Barren-Warmschere**
Warm ingots shear
Cisaille à lingots chauds

(30) Priorität: 09.12.1988 DE 3841584
(43) Veröffentlichungstag der Anmeldung: 13.06.1990
(73) Patentinhaber: ELHAUS INDUSTRIEANLAGEN GMBH, D-78239 Rielasingen-Worblingen (DE)
(72) Erfinder: Elhaus, Friedrich Wilhelm, Dipl.-Ing., D-7761 Moos (DE)
(74) Vertreter: Liesegang, Roland, Dr.-Ing.

(56) Entgegenhaltungen:
- EP-A- 0 280 983
- WO-A-81/00687
- DE-C- 2 604 418

## Beschreibung

Die Erfindung betrifft eine Barren-Warmschere mit den Merkmalen des Oberbegriffs des Anspruchs 1.

Bei einer bekannten Warmschere dieser Art (EP-A-280 983) ist nur der feststehende Scherring längs einer vertikalen Ebene geteilt, die einen Durchmesser des geschlossenen Scherringes enthält. Der bewegliche Scherring ist nicht in dieser Weise geteilt. Beide Scherringe sind mit Klemmklötzen fur die zu scherenden Stangen versehen, die von diametral entgegengesetzten Seiten auf eine zu klemmende Stange einwirken. Dies läßt ein Verformen der Stange beim Scheren in Horizontalrichtung zu. Außerdem ist die bekannte Warmschere wegen der zusätzlichen Klemmklötze aufwendig im Aufbau.

Bei einer bekannten Barren-Warmschere (DE-PS 26 04 418) ist der feststehende Scherring quer zur Scherrichtung spreizbar, um eine Deformation des Stangenanfangs im Bereich der Scherzone beim Schervorgang zu verhindern und das Verfahren der Stange in den Scherringen zu erleichtern.

Der Durchmesser des beweglichen Scherringes ist größer als derjenige des feststehenden Scherringes in dessen ungespreiztem Zustand. Um ein Anfahren der in die warmschere einfahrenden Stange an die Stirnseite des beweglichen Scherringes zu vermeiden, ist die Spreizung des feststehenden Scherringes auf ein dem Innendurchmesser des beweglichen Scherringes entsprechendes Maß begrenzt. Im maximal gespreizten Zustand fluchtet dabei der größte Innendurchmesser des feststehenden Scherringes mit der Bohrung des ungeteilten beweglichen Scherringes.

In der Begrenzung der Spreizung auf den Innendurchmesser des beweglichen Scherrings liegt ein Nachteil dieser Konstruktion. Ein weiterer Nachteil besteht darin, daß der Stangenabschnitt im Bereich des ungeteilten beweglichen Scherrings beim Scheren in Richtung der Scherbewegung aufgrund des Spaltes zwischen Scherringbohrung und Stangenoberfläche nicht abgestützt wird. Das führt zur Verkantung des Abschnitts und als Folge davon zu einem entsprechend schrägen Scherschnitt.

Der Erfindung liegt die Aufgabe zugrunde, eine Warmschere der im Oberbegriff des Anspruchs 1 angegebenen Art so auszubilden, daß ein bequemeres Einführen der zu scherenden Stange in die Warmschere auch bei stärker verkrümmten Stangen ermöglicht wird und daß eine Verformung beim Scheren und ein daraus resultierender schräger Schnitt vermieden werden.

Zur Lösung dieser Aufgabe dienen die Merkmale des Anspruchs 1.

Bei der Barren-Warmschere nach der Erfindung ist auch der bewegliche Scherring spreizbar, und zwar in Richtung der Scherbewegung, d.h. in eine um 90° versetzte Richtung zu der Spreizung des feststehenden Scherringes. Mit anderen Worten sind die beiden Scherringe "kreuzweise" zueinander spreizbar. Hierdurch lassen sich folgende Vorteile erzielen:
1. Der quer zur Scherrichtung spreizbare und an die Stange anklemmbare feststehende Scherring unterbindet jegliche Deformation des Stangenanfangs beim Scheren.
2. Der feststehende Scherring zentriert die Stange bezüglich des in Scherrichtung spreizbaren bzw. anklemmbaren beweglichen Scherringes, so daß dieser ohne Schwierigkeiten geschlossen werden kann.
3. Der bewegliche Scherring hält den Stangenabschnitt während des Schervorganges fest, so daß die Rechtwinkeligkeit des Schnittes verbessert wird.

Insbesondere der unter 2. genannte Vorteil ist ausschließlich auf die "kreuzweise" Spreizbarkeit der Scherringe zurückzuführen, die zudem den Vorteil des geringen Bauaufwandes mit sich bringt.

Die Erfindung ist im folgenden anhand schematischer Zeichnungen an einem Ausführungsbeispiel mit weiteren Einzelheiten näher erläutert. Es zeigen:
- Fig. 1: eine teilweise geschnittene Seitenansicht einer Barren-Warmschere gemäß der Erfindung, wobei zur besseren Übersichtlichkeit die Antriebe für die Spreizung der beiden Scherringe weggelassen sind;
- Fig. 2 bis 4: einen Teilschnitt und zwei Seitenansichten in Pfeilrichtung III bzw. IV, wobei nur die erfindungswesentlichen Elemente der Barren-Warmschere dargestellt sind.

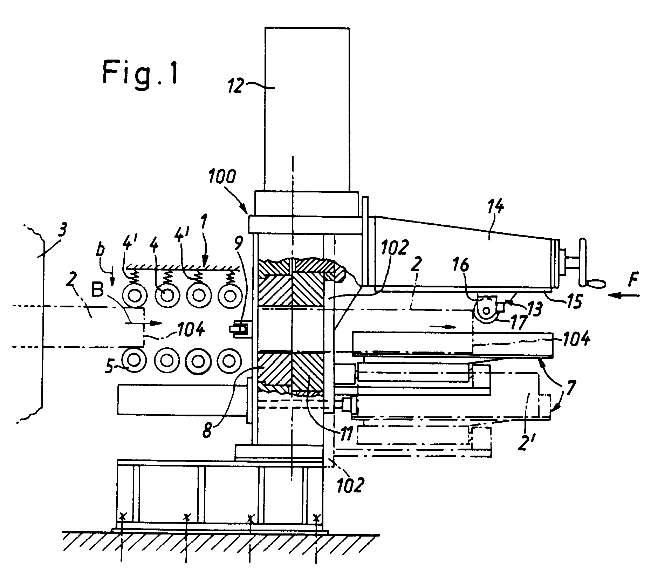

Die in Fig. 1 gezeigte Barren-Warmschere hat eine Treibvorrichtung 1, welche Stangen oder Bolzen 2 aus einer Erwärmungsanlage 3 durch Scherringe 8,11 befördert. Die Treibvorrichtung hat einen oberen Treibrollensatz 4 und einen unteren Treibrollensatz 5, wobei das den oberen Treibrollensatz lagernde Treibrollengerüst klappbar ausgebildet ist und z.B. von einer nicht dargestellten Hydraulikvorrichtung bewegt werden kann. Die Treibrollen sind in ihrer Längsachse nach beiden Seiten horizontal verschiebbar gelagert. Die oberen Rollen sind einzeln durch Federn 4′ angestellt (Pfeil b in Fig. 1). Zwischen die Treibrollensätze 4,5 ist ein Blockdrücker aus einer Ruhelage neben den Treibrollen schwenkbar, der die Barren durch die Scherringe 8,11 in Richtung des Pfeiles B in eine Übergabevorrichtung 7 hindurchdrücken kann.

Unmittelbar hinter der Treibvorrichtung 1 ist der vordere feststehende Scherring 8 im Scherengehäuse 100 fest abgestützt, dem seitlich Führungsrollen 9 vorgelagert sind. An den vorderen Scherring 8 schließt der bewegliche Scherring 11 an, welcher in einem vertikal beweglich am Scherengehäuse 100 geführten Scherringhalter 102 unterstützt ist. Auf den Scherringhalter 102 wird über eine Hydraulikanlage 12 die vertikale Scherbewegung übertragen, bei welcher der Scherring 11 über den Scherringhalter von einer mit dem feststehenden Scherring 8 fluchtenden Lage nach unten in eine strichpunktiert in Fig. 1 angedeutete Lage verschoben wird.

Es ist zu erkennen, daß das Durchmesser-/Längenverhältnis der Innenbohrungen der Scherringe 8,11 größer als eins ist.

Die dargestellte Barren-Warmschere schert von oben.

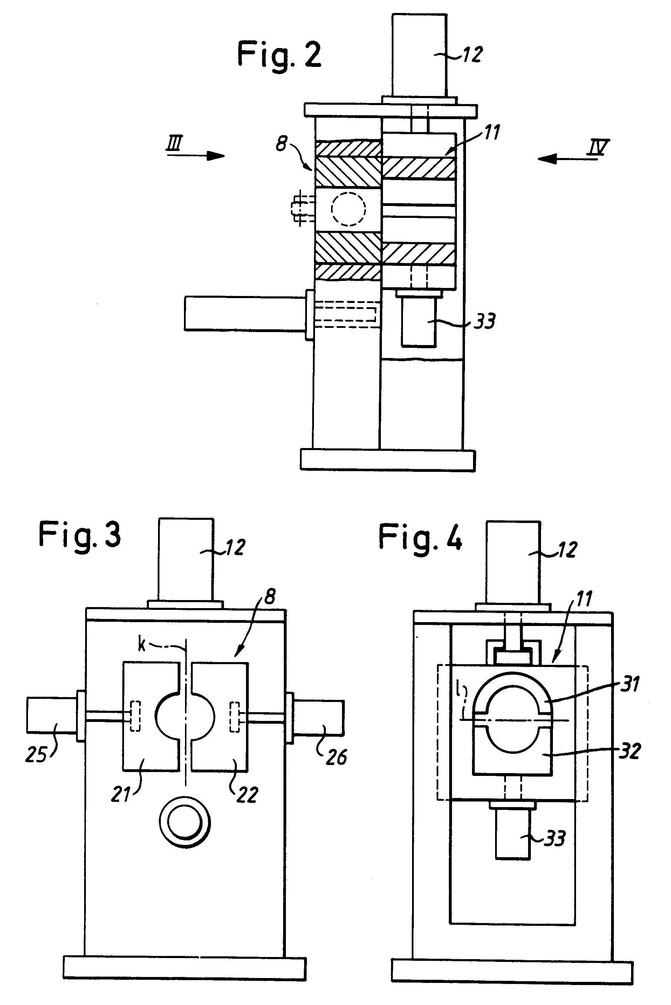

Gemäß den Figuren 2 bis 4 ist der feststehende Scherring 8 durch eine in Scherrichtung verlaufende vertikale Teilfuge in zwei Schalen 21 und 22 unterteilt (Fig. 3).

Seitlich sind an die Schalen 21, 22 gegenläufig arbeitende Hydraulikzylinder 25 und 26 angeschlossen, welche die Schalen 21, 22 des Scherringes 8 vor dem Transport der Barren durch die Scherringe 8, 11 translatorisch spreizen.

Der bewegliche Scherring 11 ist gemäß Fig. 4 durch eine quer zur Scherrichtung verlaufende horizontale Teilfuge in zwei Schalen 31, 32 unterteilt, von denen die obere Schale 31 gehäusefest ist und die untere Schale mittels eines Hydraulikzylinders 33 nach unten spreizbar ist. Die Teilfugen der beiden Scherringe 8, 11 verlaufen also kreuzweise zueinander. Nach beendetem Durchschieben der Stange durch die beiden gespreizten Scherringe 8,11 wird die Spreizung wieder aufgehoben, so daß der quer zur Scherbewegung spreizbare Scherring 8 den Barren im Scherring 11 zentriert, so daß auch dieser Scherring ohneSchwierigkeiten geschlossen werden kann. Während des Scherens hält dieser bewegliche Scherring 11 den Barren beim Scheren fest, wodurch die Rechtwinkeligkeit des Schnittes verbessert wird.

## Patentansprüche

1. Barren-Warmschere zum Scheren von angewärmten Rund- oder Flachstangen, insbesondere aus Leichtmetall, in Barren, mit einem feststehenden Scherring (8), einem beweglichen Scherring (11), und einem Antrieb (12) zum Erzeugen einer Scherbewegung des beweglichen Scherringes, wobei der feststehende Scherring (8) zwei in Richtung quer zur Scherbewegung spreizbare Schalen (21,22) aufweist, welche in einer Ebene (k) geteilt sind, die einen Durchmesser des geschlossenen Scherringes (8) enthält, dadurch **gekennzeichnet,** daß auch der bewegliche Scherring (11) zwei Schalen (31, 32) aufweist, welche in einer Ebene (1) geteilt sind, die einen Durchmesser des geschlossenen Scherringes (11) enthält und die erstgenannte Ebene (k) unter einem Winkel von 90° kreuzt, derart, daß die Schalen (31, 32) des beweglichen Scherringes (11) unter einem Winkel von 90° versetzt zu den Schalen (21, 22) des Feststehenden Scherringes (8) an die Rund- oder Flachstangen anklemmbar sind

2. Barren-Warmschere nach Anspruch 1, dadurch **gekennzeichnet**, daß den beiden Schalen (31,32) des beweglichen Scherringes (11) gegenläufige Spreizantriebe zugeordnet sind.

3. Barren-Warmschere nach Anspruch 1 oder 2, dadurch **gekennzeichnet**, daß nur eine Schale (32) des beweglichen Scherringes (11) einen Spreizantrieb (33) hat, während die andere Schale (31) gehäusefest ist.

4. Barren-Warmschere nach Anspruch 3, dadurch **gekennzeichnet**, daß die untere Schale (32) des beweglichen Scherringes (11) den Spreizantrieb (33) aufweist.

5. Barren-Warmschere nach einem der Ansprüche 1 bis 4, dadurch **gekennzeichnet**, daß das Durchmesser-/Längenverhältnis der Scherringe (8,11) größer als eins ist.

6. Barren-Warmschere nach einem der Ansprüche 1 bis 5, dadurch **gekennzeichnet**, daß den beiden Schalen (21,22) des feststehenden Scherringes (8) gegenläufige Spreizantriebe (25,26) zugeordnet sind.

## Claims

1. A hot shearing apparatus for shearing heated round or flat section bars, especially of light metal, in billets, comprising a stationary shearing ring (8), a movable shearing ring (11), and a drive means (12) for generating shearing movement of the movable shearing ring, the stationary shearing ring (8) including two shell halves (21,22) which are adapted to be spread apart in a direction transversely of the shearing movement and which are divided in a plane (k) containing a diameter of the closed shearing ring (8), **characterized** in that also the movable shearing ring (11) comprises two shell halves (31,32) which are divided in a plane (1) containing a diameter of the closed shearing ring (11) and crossing the first mentioned plane (k) under an angle of 90° such that the shell halves (31,32) of the movable shearing ring (11) are adapted to be clamped against the round or flat section bars in a direction which is offset by 90° with respect to the spreading direction of the stationary shearing ring (8).

2. The hot shearing apparatus as claimed in claim 1, wherein spreading drive means acting in opposite directions are associated with the two shell halves (31,32) of the movable shearing ring (11).

3. The hot shearing apparatus as claimed in claim 1, wherein only one shell half (32) of the movable shearing ring (11) has a spread drive means (33), while the other shell half (31) is fixed to the housing.

4. The hot shearing apparatus as claimed in claim 3, wherein the lower shell half (32) of the movable shearing ring (11) is equipped with the spread drive means (33).

5. The hot shearing apparatus as claimed in claim 1, wherein the diameter to length ratio of the shearing rings (8,11) is greater than one.

6. The hot shearing apparatus as claimed in claim 1, wherein spread drive means (25,26) acting in opposite directions are associated with the two shell halves (21,22) of the stationary shearing ring (8).

## Revendications

1. Cisaille à lingots chauds pour cisailler en lingots des barres rondes ou plates réchauffées, notamment en métal léger, comprenant un anneau de cisaillement (8) fixe, un anneau de cisaillement mobile (11), et un dispositif d'entraînement (12) pour générer un mouvement de cisaillement de l'anneau de cisaillement mobile, l'anneau de cisaillement fixe (8) présentant deux coquilles (21, 22) séparables selon la direction transverse du mouvement de cisaillement, qui sont divisées selon un plan (k) contenant un diamètre de l'anneau de cisaillement (8) fermé, caractérisée en ce que l'anneau de cisaillement fixe présente aussi deux coquilles (31, 32) qui sont divisées selon un plan (1) comprenant un diamètre de l'anneau de cisaillement (11) fermé et croisant le premier plan mentionné (k) selon un angle de 90°, de manière que les coquilles (31, 32) de l'anneau de cisaillement mobile (11) sont susceptibles de serrer les barres rondes ou plates sous un angle de 90° par rapport aux coquilles (21, 22) de l'anneau de cisaillement fixe (8).

2. Cisaille à lingots chauds selon la revendication 1, caractérisée en ce qu'il est associé aux deux coquilles (31, 32) de l'anneau de cisaillement mobile (11) un dispositif de séparation dans des directions opposées.

3. Cisaille à lingots chauds selon la revendication 1 ou 2, caractérisée en ce qu'il est associé à seulement l'une des coquilles (32) de l'anneau de cisaillement mobile (11) un dispositif de séparation (33) tandis que l'autre coquille (31) est fixe par rapport au bâti.

4. Cisaille à lingots chauds selon la revendication 3, caractérisée en ce que la coquille inférieure (32) de l'anneau de cisaillement mobile (11) est munie du dispositif de séparation (33).

5. Cisaille à lingots chauds selon l'une quelconque des revendications 1 à 4, caractérisée en ce que le rapport entre le diamètre et la longueur des anneaux de cisaillement (8, 11) est supérieur à 1.

6. Cisaille à lingots chauds selon l'une quelconque des revendications 1 à 5, caractérisée en ce qu'il est associé aux deux coquilles (21, 22) de l'anneau de cisaillement fixe (8) des dispositifs de séparation (25, 26) dans des directions opposées.
